# EUROPEAN PATENT APPLICATION

(11) **EP 4 089 008 A1**
(43) Date of publication of application: **16.11.2022**
(21) Application number: 21173732.5
(22) Date of filing: 13.05.2021
(51) Int. Cl.: B64C 3/28, B64C 3/26, B64C 21/06

(54) **LOW DRAG REMOVABLE JOINT FOR AERODYNAMIC SURFACES**

(71) Applicant: Aernnova Aerospace, 01510 Miñano (ES)
(72) Inventor: Cruz Palacios, David, 28034 Madrid (ES); Martin de la Escalera, Federico, 28034 Madrid (ES); Castillo Acero, Miguel Angel, 45200 Illescas (ES); Kleineberg, Markus, 30966 Hemmingen (DE); Herrmann, Ulrich, 38108 Braunschweig (DE)

(57) **Abstract**

A low drag joint for removable parts, especially indicated for laminar flow designs, where the conventional joint with fasteners is substituted by a plug-and-socket concept complemented with few fasteners, thus minimizing the additional work required to seal the heads of the fasteners to achieve the smooth surface required for laminar flow. In this low drag removable joint a first part (1) comprises at least one male element (5) below the aerodynamic surface and a second part (2) comprises at least one corresponding female element (6) below the aerodynamic surface, and the first and second parts are joined by inserting the male elements of the first part into the female elements of the second part, the joint further comprising at least one conventional fastener to fix the first and second parts together. Also, an intermediate adaptor is defined to use the new joining concept on existing structures prepared for conventional joints.

The invention is included in the field of aircraft structures and also in that of aerodynamic surfaces designed for laminar flow.

## Description

### TECHNICAL FIELD OF THE INVENTION

The present invention is included in the field of aircraft structures, and also in that of the aerodynamic surfaces designed for laminar flow.

Converting current non-laminar aircraft joints (as for example the attachments between Leading Edge to Wing/Tailplane box) onto laminar joints has the potential of reducing the aerodynamic drag.

A big and quantifiable drag reduction can be achieved by eliminating the perturbances created by the bolt heads in those joints that would otherwise trigger premature transition to turbulent flow at the joint, preventing exploitation of the full drag reduction potential of laminar flow. The use of low drag laminar joints is even more important when the Leading Edge structure is replaced by a Hybrid Laminar Flow Control (HLFC) enabled Leading Edge, for example including suction means for boundary layer control.

The field of application of the present invention is that of structural joints exposed to an aerodynamic flow where there is interest in achieving a reduction of the aerodynamic drag, such as the case of aerospace structures, in particular those designed for achieving laminar flow. It is also applicable to other industries where the drag reduction is beneficial, such are trains, automotive or other.

### BACKGROUND OF THE INVENTION

Currently, great efforts have been done in order to reduce the carbon footprint of modern aircraft. In line with this, several improvements are being introduced on airplanes to reduce the overall drag and, therefore, the fuel consumption.

Fasteners joining parts on aerodynamic surfaces, such are screws or rivets, are potential sources of drag, if the fastener head is not perfectly aligned with the aerodynamic surface, as usually occurs due to manufacturing and installation tolerances. To avoid the drag induced by fasteners, labour intensive operations are usually done in order to smooth the area where the fasteners are installed, by applying sealant on the potential voids around the fasteners head to achieve a smooth surface, or similar operations.

Extensive research has been made on laminar hidden joints by using over-countersunk holes and filling the bolt head recess with low shrinkage resins or new sealants and a laminar tape to hide the joint. This process is well-known, but specific environmental conditions are needed to perform the task, and it is a time consuming process with poor serial or field application.

If the joint is removable, as it is usual for leading edge parts on wings or stabilizing surfaces, this time consuming operation has to be repeated every time the part is removed for maintenance. In particular, the leading edge areas are of extreme importance in terms of aerodynamic smoothness if a laminar flow is desired, thus making extreme the importance of the smoothness in the area and the care required to seal aerodynamically those fasteners areas.

There is a need for a joining system that eliminates or reduces the use of common fasteners in those aerodynamically sensitive areas, in order to minimize the labour costs associated to the aerodynamic sealing of the fasteners area. This is the purpose of the present patent.

### BRIEF DESCRIPTION OF DRAWINGS

Present specification is complemented with a set of drawings, illustrative of the preferred example and never limiting the invention.
Fig 1 shows the state of the art for joining a removable aerodynamic part to a fixed structure
Fig 2 shows a detail of the conventional joint with fasteners between aerodynamic surfaces
Fig 3 shows the reduction in the number of fasteners needed when joining a removable aerodynamic part to a fixed structure using the joint concept of the patent
Fig 4 shows a detail of the new joint concept with male and female elements on the mating parts
Fig 5 is an alternative concept of the new joint with discrete male and female elements on each mating part
Fig 6 shows the intermediate part to use the new joint concept on existing fixed structures prepared for conventional joints with fasteners
Fig 7 shows an implementation of the patent where the female element on one of the parts is constituted by studs with a large head
Fig 8 shows another alternative implementation of the patent where the female element on one of the parts is constituted by studs with a large head
Fig 9 shows an implementation of the patent using studs as female elements and the adaptor part to use the new joint on fixed structures prepared for conventional joints with fasteners

### DESCRIPTION OF THE INVENTION

The present invention consists in a new joint design for external aircraft parts exposed to the airflow, such are wings, stabilizers or fuselage surfaces. In particular, the joint system described here is of particular interest for the joining of parts that need to be removable for maintenance reasons, such are the leading edges of wings or stabilizers, or other aerodynamic fairings.

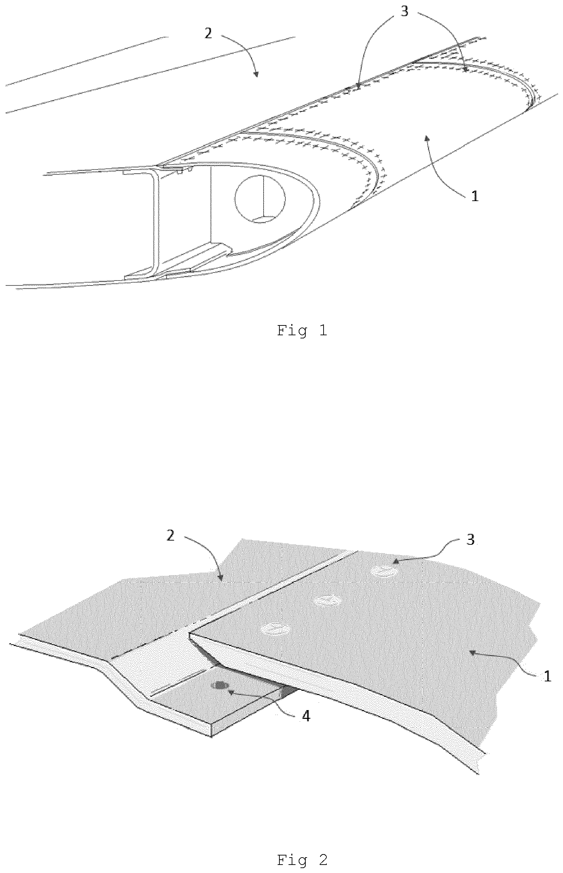

When joining a removable part (1) such as a leading edge or a fairing to the receiving structure (2), usually the removable part is attached by means of screws (3) distributed around its perimeter (Fig 1, Fig 2). Every time these screws are assembled, they have to be later covered with aerodynamic sealant and paint to achieve a uniform and smooth aerodynamic surface, in order to reduce drag and to enable laminar flow downstream of their location.

The purpose of the present invention is to eliminate, or at least reduce in a significant way, the number of fasteners needed to join those parts to the receiving structure, by means of a new joint system that uses a clip concept for joining the parts.

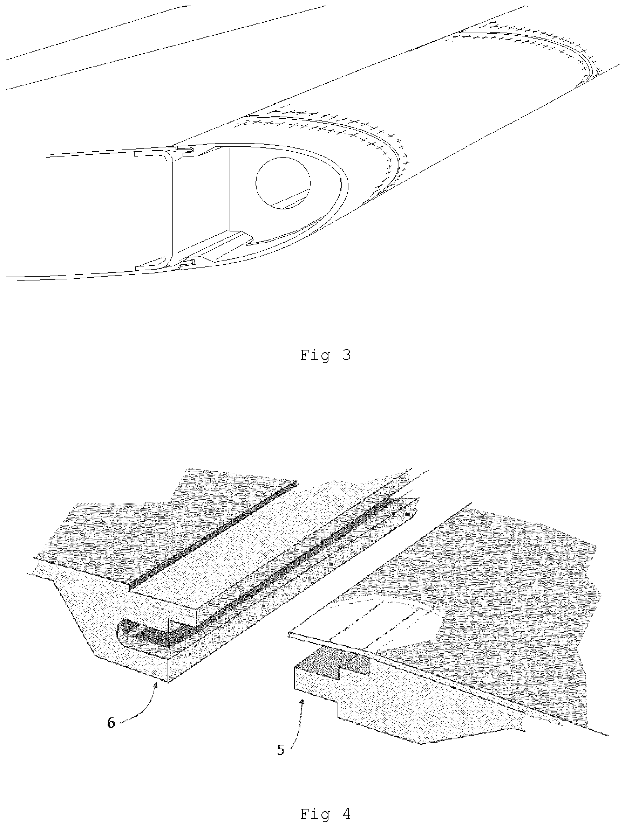

Fig 3 shows the joining concept subject of this patent illustrated for the particular case of a leading edge, although the same concept is applicable to many other aerodynamic parts, where a significant number of fasteners have been eliminated from the joint, substituting them by a "clipping", or "plug and socket" concept (Fig 4). In this joint, one of the parts includes some protruding "male" elements (5) that match corresponding "female" recesses (6) in the other part. This type of joint locks both parts in a direction perpendicular to the surface, but not in the plane of the surface; to lock the parts in the plane of the aerodynamic surface, some conventional fasteners may be included in the joint, preferably near the corners of the removable part (Fig 3). The result is a joint where most of the fasteners have been suppressed, thus achieving a very uniform and smooth external surface, eliminating or significantly reducing the labour related to the sealing of the fasteners heads.

The same joint system previously described could be used by changing the location of the male and female elements of the joint, which can be indistinctly on the fixed or the removable part each one of them, or even in a mixed configuration.

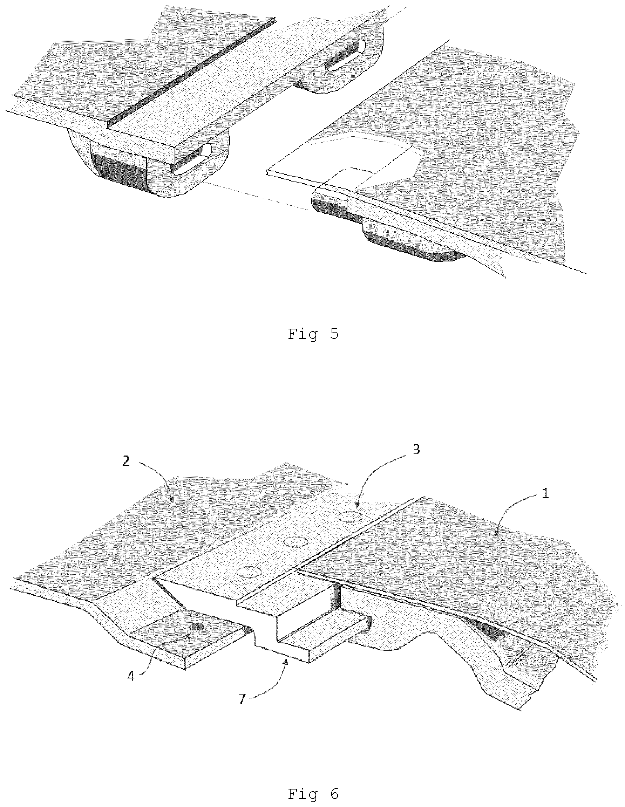

A variation of the joint design described above substitutes the continuous or substantially continuous clipping system along the parts interface (Fig 4) by a discrete and non-continuous "plug and socket" configuration, as shown in Fig 5.

In the particular case of joints of leading edges to the fixed structure of a wing or stabilizer, the joint system described here is mainly applicable to the joints in the spanwise (substantially linear) direction. For the curved joints in the extremes of the leading edge parts usually it is preferred to maintain the usual fastened configuration, as shown in Fig 3.

The new joint system previously described can be used for new designs of aeronautical structures. However, it is usual in the case of new leading edges designed for laminar flow (usually including a boundary layer suction system through a multi-perforated skin) to design them to be replaceable with current standard leading edges, joining to a conventional fixed structure (wing, stabilizer, etc) not designed for the joining system subject of this patent. In those cases, the system described here can easily be used by inserting an intermediate mating part (7) permanently attached to the receiving structure (2) (Fig 6). The intermediate part (7) is fastened to the fixed structure using the same interface (fasteners holes, 4) used for the conventional joint, and these fasteners (3) have to be aerodynamically sealed as usual. This sealing operation will be made just once, since the intermediate part (7) will be permanently attached to the receiving structure (2), and the new removable leading edge will attach to the intermediate part (7) by using the new clipping system described on this patent.

This joint concept is applicable to parts manufactured in any material, such are metallic parts, composite or plastic parts, etc. The intermediate part (7) can be also manufactured in different alternative materials.

### DETAILED DESCRIPTION OF PARTICULAR EMBODIMENTS OF THE INVENTION

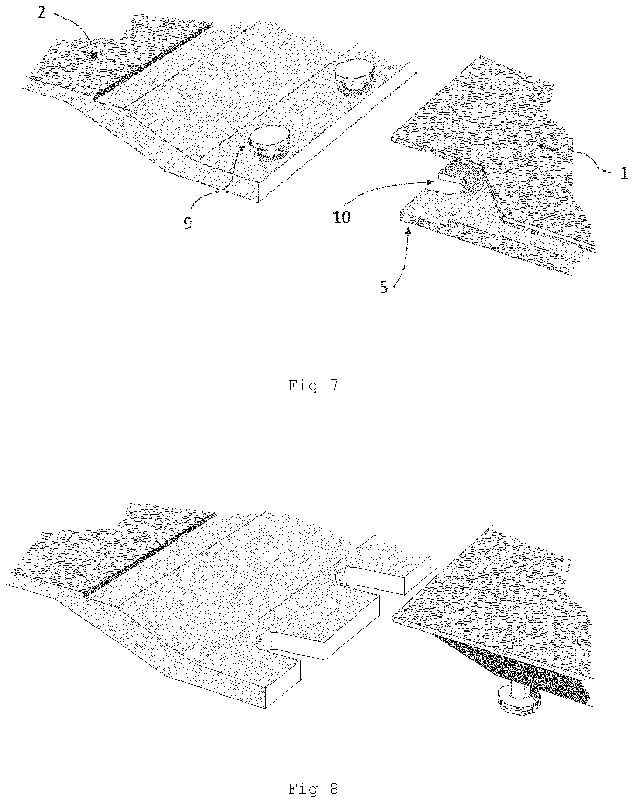

An alternative implementation of the clip joint configuration described on this patent is shown in Fig 7, where the female or "socket" element of the joint in part (2) is constituted by studs (9) with a large head, while the male element (5) of the mating part (1) includes recesses (10) matching the studs. This configuration not only fixes the joint, but also guides the parts during installation and position them in their right location. The male and female elements can be either on the fixed or the removable part, as shown in Fig 8.

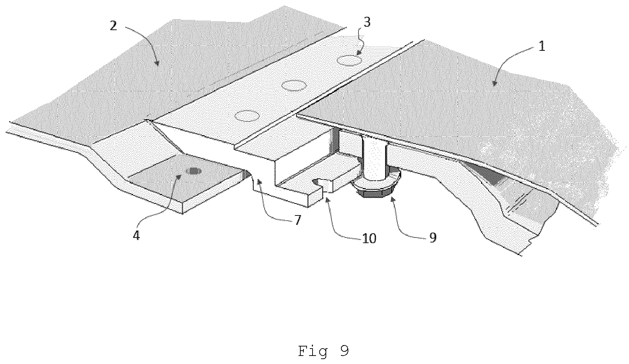

The implementation previously described is also applicable when using an intermediate adaptor (7) for adapting the new joint to existing conventional structures, as shown in Fig 9.

## Claims

1. A low drag removable joint for aerodynamic surfaces where a first part comprises at least one male element (5) below the aerodynamic surface and a second part comprises at least one corresponding female element (6) below the aerodynamic surface, and the first and second parts are joined by inserting the male elements of the first part into the female elements of the second part, the joint further comprising at least one conventional fastener to fix the first and second parts together.

2. The low drag removable joint according to claim 1 where the female elements in the first part are stud-type elements (9) with a large head, and the male elements in the second part include recesses (10) to allow the studs to be inserted.

3. A low drag removable joint for aerodynamic surfaces comprising:
a. A fixed structure (2) with a pattern of holes (4) prepared for a conventional joint with fasteners (3) to a removable part,
b. a removable part (1) designed for the low drag joint according to any of the claims 1 or 2,
c. and an intermediate part (7) joined with conventional fasteners (3) to the fixed structure (2) through the existing pattern of holes (4), and joined to the removable part (1) with the low drag joint according to any of the claims 1 or 2

4. The low drag joint according to any of the claims 1 to 3 where one of the parts is the leading edge of a wing-type element.

5. The low drag joint according to any of the claims 1 to 3 where one of the parts is an aerodynamic fairing.

6. The low drag joint according to any of the claims 1 to 3 where one of the parts is a leading edge of a wing-type element including a boundary layer control system to achieve laminar flow.

7. An aircraft including at least one low drag joint according to any of the claims 1 to 6.
